Europäisches Patentamt

European Patent Office

Office européen des brevets

(19)

(11) Veröffentlichungsnummer: **0 300 247 B1**

(12) **EUROPÄISCHE PATENTSCHRIFT**

(45) Veröffentlichungstag der Patentschrift :
19.06.91 Patentblatt 91/25

(51) Int. Cl.⁵ : **B23C 5/06, B23C 5/20**

(21) Anmeldenummer : 88110507.6

(22) Anmeldetag : 30.06.88

(54) **Kombifräser.**

Verbunden mit 88905789.9/0370037
(europäische
Anmeldenummer/Veröffentlichungsnummer)
durch Entscheidung vom 20.11.90.

(30) Priorität : 21.07.87 DE 3724006

(43) Veröffentlichungstag der Anmeldung :
25.01.89 Patentblatt 89/04

(45) Bekanntmachung des Hinweises auf die
Patenterteilung :
19.06.91 Patentblatt 91/25

(84) Benannte Vertragsstaaten :
AT BE CH DE ES FR GB IT LI LU NL SE

(56) Entgegenhaltungen :
DE-A- 2 615 913
DE-A- 3 210 059
DE-A- 3 311 467
FR-A- 2 306 772
US-A- 1 460 029
US-A- 1 460 030

(73) Patentinhaber : **Feldmühle Aktiengesellschaft**
**Fritz-Vomfelde-Platz 4**
**W-4000 Düsseldorf 1 (DE)**

(72) Erfinder : **Kraft, Harald, Dipl.-Ing.**
**Aspachstrasse 9**
**W-7336 Uhingen 1 (DE)**

## Beschreibung

Die Erfindung betrifft eine Wendeschneidplatte, insbesondere zur Verwendung als Schlichtschneidplatte in Kassetten von Mehrzahnfräsern, die mit mehreren runden Wendeschneidplatten zum Schruppen und mindestens einer Schlichtschneidplatte bestückt sind.

Beim Fräsen mit Stirnfräsern unterscheidet man Einzahn-, Mehrzahn- und Vielzahnfräser, die jeweils unterschiedliche Anwendungsgebiete bestreichen. Der Einzahnfräser, der in einem Einbauelement gelagert ist, läßt sich feinfühlig einstellen, d.h., daß die Hauptschneide, die ballig ausgeführt ist, zur Arbeitsebene ausgerichtet werden kann, ebenso wird durch diese Feineinstellung der Spindelsturz der Maschine ausgeglichen. Bei einer Schnittiefe von ca. 0,05 mm und einem Vorschub zwischen 0,05 und 0,5 mm pro Umdrehung lassen sich mit diesem Einzahnfräser Oberflächengüten mit $R_a$ = ca. 0,4 μm erreichen, d.h. die Oberflächengüte entspricht der des Schleifens.

Mehrzahnfräser sind mit Kassetten ausgestattet, die runde oder quadratische Wendeschneidplatten in der Ausführung 45 Grad und 75 Grad Einstellwinkel aufnehmen. Sie werden üblicherweise zum Schruppfräsen eingesetzt, wobei die erreichte Oberflächengüte vom Vorschub pro Zahn der verwendeten Wendeschneidplatte und dem axialen Planlauf des Fräsers abhängt, im allgemeinen werden Werte von $R_a$ zwischen 3,2 und 12,5 μm erreicht.

Vielzahnfräser werden vornehmlich in der Automobilindustrie eingesetzt. Sie eignen sich zum Fräsen von Zylinderblöcken und ähnlichen Teilen. Die erreichte Oberflächengüte liegt bei $R_a$ 12 μm.

In vielen Fällen reicht es im allgemeinen Maschinenbau nicht aus, eine Oberfläche lediglich einer Schruppbearbeitung zu unterziehen, es muß vielmehr eine weitere Bearbeitung, d.h. eine Schlichtbearbeitung und ggf. sogar ein Schleifen, folgen. Der dazu üblicherweise erforderliche Werkzeugwechsel ist zeitaufwendig und erfordert auch Lagerkosten für das Schlichtwerkzeug. Es ist deshalb schon vorgeschlagen worden – FR-A-2 306 772 –, einen Mehrzahnfräser mit einer besonderen Bestückung auszurüsten, d.h., daß außer den Schruppkassetten im Fräser auch eine Schlichtkassette eingebaut wird. Dadurch ist es möglich, mit einem einzigen Arbeitsgang sowohl zu Schruppen als auch zu Schlichten. Die Schlichtoperation wird dabei dadurch ermöglicht, daß die im Einsatz befindliche Schneidkante der quadratischen Schlichtplatte axial gegenüber den anderen Schneidkanten um einen geringen Betrag vorsteht, radial dagegen zurückgesetzt ist, was die Gefahr bedingt, daß die der Schlichtschneide folgende Schruppplatte überlastet wird und somit diese Schneide vorzeitig verschleißt.

Der Erfindung liegt damit die Aufgabe zugrunde, eine Schlichtplatte zu fertigen, die bei rotierenden Werkzeugen die Sicherheit bietet, daß die folgende Schruppplatte nicht überlastet wird.

Diese Aufgabe wird bei einer gattungsgemäßen Wendeschneidplatte dadurch gelöst, daß die parallelen Deckflächen an ihrem Umfang von einem einen Winkel $\alpha$ mit einem ersten Radius $R_1$ einschließenden ersten Kreisbogen und einem diesem gegenüberliegenden ebenfalls mit dem ersten Radius $R_1$ einen Winkel $\alpha$ einschließenden gleichartigen Kreisbogen, sowie einer sich an den ersten Kreisbogen anschließenden ersten Linie und einer sich an den gleichartigen Kreisbogen anschließenden zweiten Linie, wobei die erste Linie sich zu einem ersten Bogen mit dem Radius r erstreckt und sich die zweite Linie, zu einem zweiten Bogen mit dem Radius r erstreckt, die Kreisbögen, die Schruppschneiden und die Linien, die Schlichtschneiden einer kombinierten Schrupp- und Schlichtschneide definieren, ferner der erste Bogen über eine erste Strecke mit dem zweiten Kreisbogen und der zweite Bogen über eine zweite Strecke mit dem ersten Kreisbogen verbunden ist, begrenzt werden.

Aus dieser Kombination ergibt sich, daß die Schlichtschneidplatte zwei Funktionen erfüllt. Mit dem Bereich des Kreisbogens leistet sie, wie jede Schruppschneidplatte, die gleiche Spanabnahme, d.h. sie schruppt. Mit dem daran anschließenden Bereich, also der Linie, der an einer bereits durch Schruppschneiden bearbeiteten Fläche angreift und hier die vom Schruppen erzeugten Kammlinien entfernt, erfolgt das Schlichten. Die Länge der Linie ist dabei gemäß einer bevorzugten Ausgestaltung der Erfindung so gewählt, daß sie größer als der maximal mögliche Vorschub ist, also bei einer Umdrehung ein Mehrfaches des durch den Vorschub auf dem Werkzeug zurückgelegten Weges überdeckt.

Die Erfindung wird nachstehend anhand der Figuren erläutert. Es zeigen :

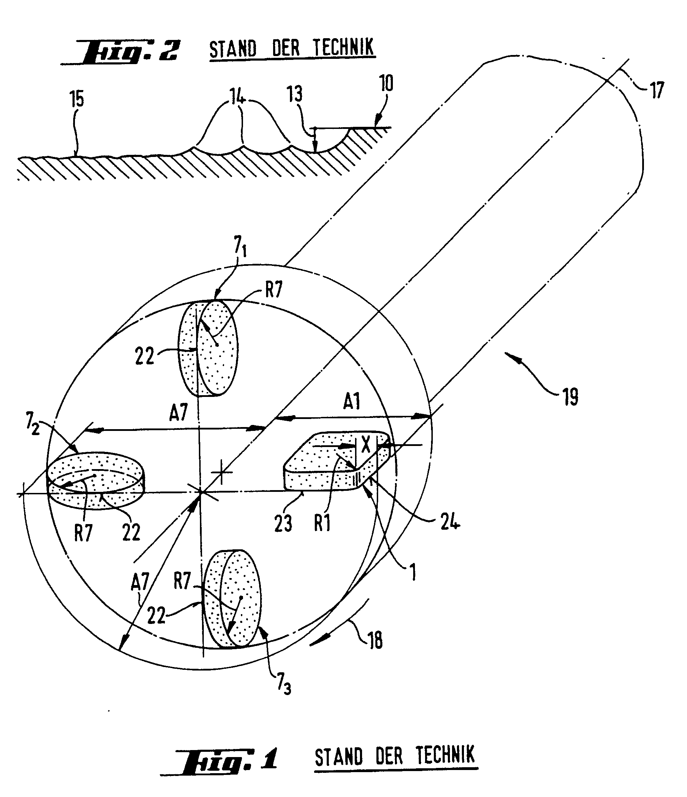

Fig. 1 einen Mehrzahnfräser schematisch in perspektivischer Darstellung nach dem Stand der Technik,

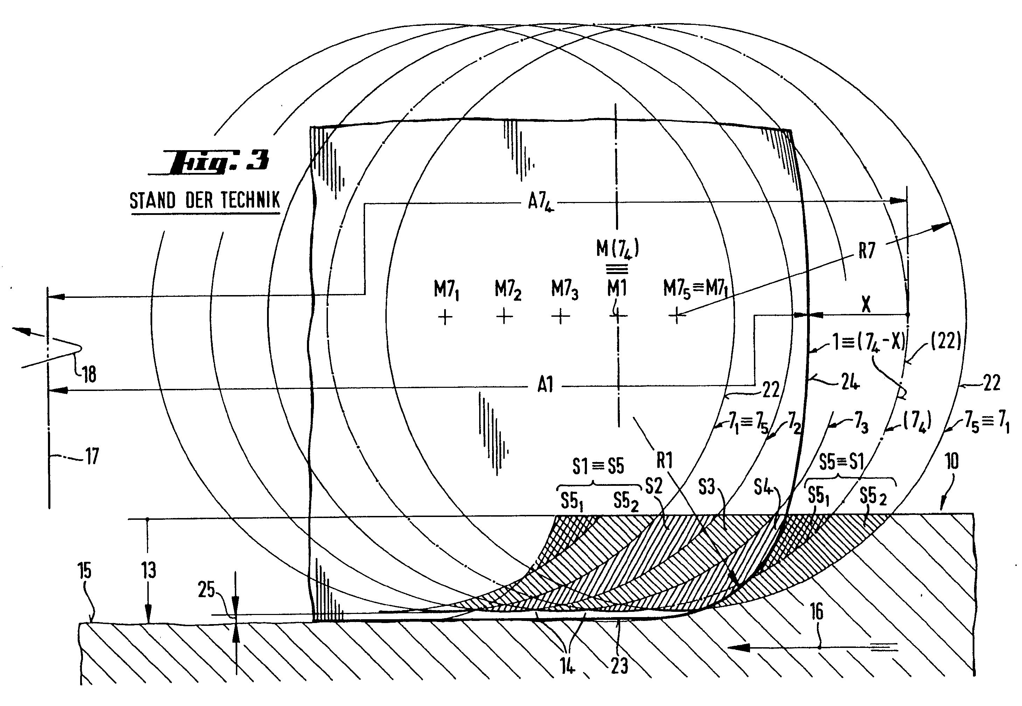

Fig. 2 einen vergrößerten Detailquerschnitt durch einen Werkstückbereich, der mit dem Fräser nach Fig. 1 bearbeitet wurde,

Fig. 3 ein Spanfolgebild, das bei der Verwendung des Mehrzahnfräsers nach Fig. 1 entsteht,

Fig. 4 einen Mehrzahnfräser schematisch und perspektivisch nach der Erfindung,

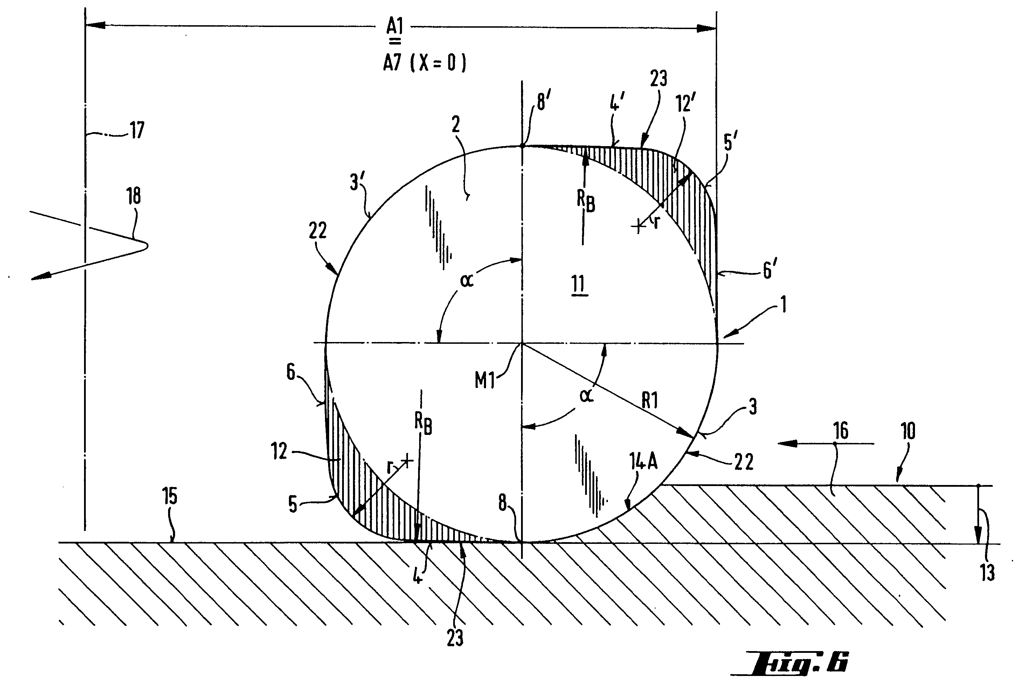

Fig. 5 vergrößert und geschnitten ein Detail eines Werkstückes, das mit dem erfindungsgemäßen Fräser bearbeitet wurde,

Fig. 6 eine kombinierte Schrupp- und Schlichtschneidplatte im Aufriß, vergrößert. gegenüber Fig. 4, samt schematischer Darstellung von Werkstück und Spindel,

Fig. 7 das Spanfolgebild im Querschnitt, das bei Verwendung der erfindüngsgemäßen Schrupp- und Schlichtschneidplatte entsteht.

Der Mehrzahnfräser (19) nach dem Stand der Technik zeigt in vereinfachter Form dargestellt nur vier Schneiden. Die Schruppschneidplatten ($7_1$, $7_2$, $7_3$) haben zylindrische Form und damit kreisbogenförmige Schruppschneiden (22). Die Schlichtschneidplatte (1) hat prismatische Form auf der Basis eines Quadrates, daher eine gerade Schlichtschneide (23). Der axiale Schneidbereich (24) ist um einen Betrag X radial gegenüber den Schruppschneiden (7) zurückgesetzt. Dadurch wird beim Schlichten die Schlichtschneidplatte (1) von der Schrupparbeit entlastet. Folgt nun entsprechend der Drehrichtung (18) die Schruppschneidplatte ($7_1$), dann hat diese einen wesentlich größeren Schruppspan zu nehmen, als die nachfolgenden Schruppschneiden (22), der Schruppschneidplatten ($7_2$) und ($7_3$).

Gemäß dem Stand der Technik haben wir es also hier mit drei verschiedenen Belastungen der Schneiden (22, 23, 24) zu tun. Einmal die Normalbelastungen der Schneiden (22) beim Schruppen durch die Schneidplatten ($7_2$) und ($7_3$), zum anderen die geringere Belastung der Schneiden (23 ; 24) der Schlichtschneidplatte (1) und schließlich die sehr hohe Belastung der Schneide (22) der nachfolgenden Schruppschneidplatte ($7_1$). Es entsteht dadurch eine nicht befriedigende Oberfläche (15).

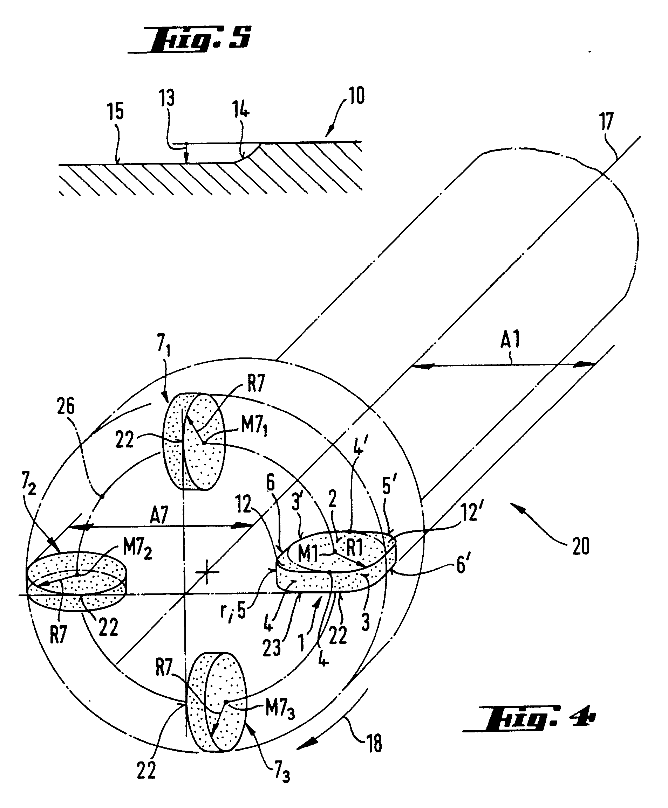

Wie Fig. 3 zeigt, dreht sich der Mehrzahnfräser in Richtung (18) um die Spindelmitte (17).

Im Abstand A7 sind die äußeren Bereiche der Schneiden (22) der Schruppschneidplatten (7) von der Spindelmitte (17) angeordnet. Die Schruppschneide (24) der Schlichtschneidplatte (1) ist um einen Betrag X zurückgesetzt und hat den Abstand A1 von der Spindelmitte (17).

Durch diese Maßnahme wird nach dem Stand der Technik die Schneide (24) vom Schruppen weitgehend entlastet, während die Schneide (23) schlichtet. Die Schlichtschneidplatte (1) läßt aber den Spanzwickel $S5_1$ stehen (kreuzschraffiert), so daß die nachfolgende Schneide (22) der Schruppschneidplatte ($7_1$) (entspricht $7_5$) einen größeren Span zu bewältigen hat, nämlich S1 entspricht $S5 = S5_1 + S5_2$. Während also die Späne S2 und S3 normalgroße Schruppspäne gleicher Größe sind, ist der Span S4, je nach Dicke (25) des Schlichtspanes der Schlichtschneide (23), kleiner. In aller Regel wird man eine Schlichtspantiefe (25) wählen, die gerade die Kuppen (14) des Schruppbereiches wegnimmt, so daß man davon ausgehen muß, daß der Span S4 wesentlich kleiner ist als der Span S3. Unmittelbar darauf aber kommt dann (in Werkstückvorschubrichtung (16) betrachtet) der wesentlich größere Span S5 zur Abhebung. Die unterschiedliche Belastung bei normaler Spantiefe (Zustellung 13) der einzelnen Schneidplatten führt zu unterschiedlichem Plattenverschleiß und hat negative Auswirkungen auf die Qualität Der Oberfläche des geschlichteten Bereiches (15). Bei den Schlichtschneidplatten (1) nach dem Stand der Technik ist der Radius R1 klein gehalten, um eine lange Schlichtschneide (23) zu erhalten und das Zurücksetzen um das Maß X zu ermöglichen. Dadurch entsteht eine völlig andere Schneidengeometrie als bei den Schruppschneiden, was sich nachteilig auf die Laufruhe und Präzision beim Fräsen auswirkt.

Die gemäß der Erfindung verwendete Schneidplatte ist eine kombinierte Schrupp- und Schlichtschneidplatte (1). Sie wird durch ein Basisschruppteil (11) in der Form der Schruppschneidplatten (7) mit zwei diagonal gegenüber angeordneten Schlichtansätzen (12, 12') gebildet und weist zwei parallele Deckflächen (2) auf Die Deckflächen (2) werden von zwei sich gegenüberliegenden, einen Winkel α einschließenden Kreisbögen (3, 3') mit einem Radius $R_1$ (Schruppschneiden 22) und sich daran bei (8, 8') anschließenden Linien (4, 4') (Schlichtschneiden 23), die in Bögen (5, 5') mit einem Radius r einmünden und diese Bögen (5, 5') über eine Strecke (6, 6') mit den Kreisbögen (3, 3') verbinden, begrenzt. Im Schruppbereich (14A) arbeitet die Schruppschneide (22) des Basisschruppteiles (11) im Bereich des kreisbogens (3) genauso wie die übrigen Schruppschneidplatten (7), so daß eine homogene und einheitliche Belastung aller Schneiden gegeben ist, wodurch keine durch unterschiedliche Schnittkräfte und unterschiedliche Verschleißerscheinungen verursachten Vibrationen entstehen können. Die Schlichtschneide (23), die durch den Schlichtansatz (12, 12') im Bereich der Linien (4, 4') gebildet wird, kann – sozusagen in einem Zuge – die Schruppkämme (14) abarbeiten.

Durch Verwendung dieser kombinierten Schrupp- und Schlichtschneidplatte (1) entsteht in einem Arbeitsgang eine Oberfläche (15) hoher Güte. Durch die gleiche Belastung aller Schneiden haben diese auch alle die gleiche Standzeit.

Wie Fig. 6 insbesondere zeigt, kann die Schlichtschneide (23) eine große Balligeit $R_B$ aufweisen. Die Länge dieser Schlichtschneide (23) ist so angelegt, daß eine Überdeckung von mehr als einem durch die voranlaufenden Schruppschneiden erzeugten Schruppkämme (14) erfolgt. Die Radien r, zur Bildung der Bögen (5, 5') können natürlich kleiner sein als dargestellt, so daß sich hierdurch eine längere Linie (4, 4') bzw. Schlichtschneide (23, 23') ergibt.

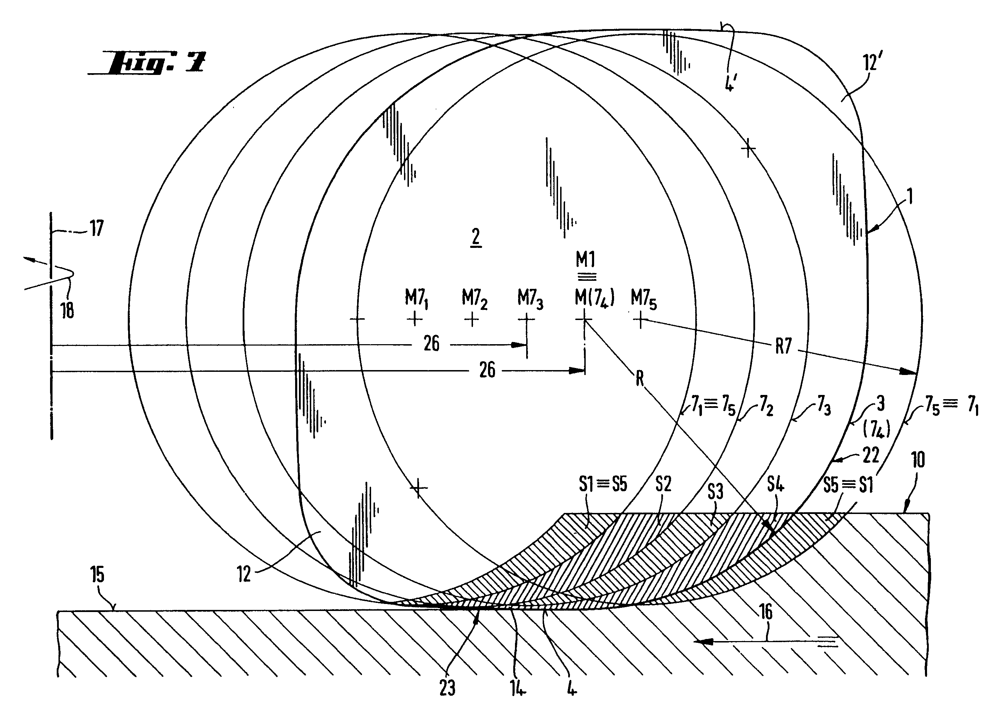

Zur Verdeutlichung ist in Fig. 7 der Werkstückvorschub (16) pro Span S1, S2, S3, S4 und S5 vergrößert dargestellt. Die Mitten der einzelnen Schneidplatten sind mit $M7_1$, $M7_2$, $M7_3$ und M1 bezeichnet. Ihr geometrischer Ort im Mehrzahnfräser (20) ist ein einziger Kreisbogen (26) – vergleiche Fig. 4 –.

## Ansprüche

1. Wendeschneidplatte mit parallelen Deckflächen (2), insbesondere zur Verwendung als Schlichtschneidplatte (1) in Kassetten von Mehrzahnfräsern (10), die mit mehreren runden Wendeschneidplatten (7) zum Schruppen und mindestens einer Schlichtschneidplatte (1) mit balliger Form bestückt sind, dadurch gekennzeichnet, daß die parallelen Deckflächen (2) an ihrem Umfang von einem einen Winkel α mit einem ersten Radius $R_1$ einschließenden ersten Kreisbogen (3) und einem diesem gegenüberliegenden ebenfalls mit dem ersten Radius $R_1$ einen Winkel α einschließenden gleichartigen Kreisbogen (3') sowie einer sich an den ersten Kreisbogen (3) anschließenden ersten Linie (4) und einer sich an den gleichartigen Kreisbogen (3') anschließenden zweiten Linie (4'), wobei die erste Linie (4) sich zu einem ersten Bogen (5) mit dem Radius r erstreckt und sich die zweite Linie (4') zu einem zweiten Bogen (5') mit dem Radius r erstreckt, die Kreisbögen (3, 3'), die Schruppschneiden (22) und die Linien (4, 4'), die Schlichtschneiden (23) einer kombinierten Schrupp- und Schlichtschneide (1) definieren, ferner der erste Bogen (5) über eine erste Strecke (6) mit dem zweiten Kreisbogen (3') und der zweite Bogen (5') über eine zweite Strecke (6') mit dem ersten Kreisbogen (3) verbunden ist, begrenzt werden.

2. Wendeschneidplatte nach Anspruch 1, dadurch gekennzeichnet, daß der Radius $R_1$ der Kreisbögen (3, 3') der Schlichtschneidplatte (1) dem Radius der runden Wendeschneidplatten zum Schruppen (7) entspricht.

3. Wendeschneidplatte nach Anspruch 1 oder 2, dadurch gekennzeichnet, daß der Winkel α ausgehend vom Angriffspunkt (8, 8') der kreisbögen (3, 3') an den Linien (4, 4'), die die Schlichtschneide (23) bildet, 10 bis 90 Grad beträgt.

4. Wendeschneidplatte nach einem der Ansprüche 1 bis 3, dadurch gekennzeichnet, daß die Linien (4, 4'), die die Schlichtschneide (23) bilden, Teil eines Kreises mit dem Balligkeitsradius $R_B$ > als 20 $R_1$ ist.

5. Wendeschneidplatte nach einem der Ansprüche 1 bis 3, dadurch gekennzeichnet, daß die Linien (4, 4'), die die Schlichtschneide (23) bilden, eine Gerade sind.

6. Wendeschneidplatte nach einem der Ansprüche 1 bis 5, dadurch gekennzeichnet, daß der Radius r der Bögen (5, 5') das 0,1- bis 0,25-fache des Radius $R_1$ der Kreisbögen (3, 3') beträgt.

7. Wendeschneidplatte nach einem der Ansprüche 1 bis 6, dadurch gekennzeichnet, daß die Länge der Linien (4, 4'), die die Schlichtschneide (23) bilden das 0,1 bis 0,9 fache des ersten Radius $R_1$ beträgt.

## Claims

1. Turnable cutting plate having parallel top faces (2), especially for use as a smoothing cutting plate (1) in holders of multi-toothed milling cutters (19) which are equipped with several round turnable cutting plates (7) for roughing and at least one smoothing cutting plate (1) having a cambered shape, characterised in that the parallel top faces (2) are delimited at their periphery by a first arc (3) having a first radius $R_1$ and subtending an angle α and by a similar arc (3') lying opposite the first arc and likewise having the first radius $R_1$ and subtending an angle α, as well as by a first line (4) adjacent to the first arc (3) and a second line (4') adjacent to the similar arc (3'), the first line (4) continuing into a first corner (5) having the radius r and the second line (4') continuing into a second corner (5') having the radius r, the arcs (3, 3') defining the roughing edges (22) and the lines (4, 4') defining the smoothing edges (23) of a combined roughing and smoothing cutting plate (1), and the first corner (5) being connected via a first section (6) to the second arc (3') and the second corner (5') being connected via a second section (6') to the first arc (3).

2. Turnable cutting plate according to claim 1, characterised in that the radius $R_1$ of the arcs (3, 3') of the smoothing cutting plate (1) corresponds to the radius of the round turnable cutting plates (7) for roughing.

3. Turnable cutting plate according to claim 1 or 2, characterised in that the angle α starting from the meeting point (8, 8') of the arcs (3, 3') with the lines (4, 4') which form the smoothing edge (23) is from 10 to 90 degrees.

4. Turnable cutting plate according to any one of claims 1 to 3, characterised in that the lines (4, 4') forming the smoothing edge (23) are part of a circle having the radius of camber $R_B$ > than 20 $R_1$.

5. Turnable cutting plate according to any one of claims 1 to 3, characterised in that the lines (4, 4') forming the smoothing edge (23) are straight lines.

6. Turnable cutting plate according to any one of claims 1 to 5, characterised in that the radius r of the corners (5, 5') is from 0.1 to 0.25 times the radius $R_1$ of the arcs (3, 3').

7. Turnable cutting plate according to any one of claims 1 to 6, characterised in that the length of the lines (4, 4') forming the smoothing edge (23) is from 0.1 to 0.9 times the first radius $R_1$.

## Revendications

1. Taillant amovible à surfaces de recouvrement (2) parallèles, en particulier pour une utilisation comme taillant de finition (1) dans des unités de montage de fraises à plusieurs dents (10), qui sont équipées de plusieurs taillants amovibles (7) circulaires pour l'usinage d'ébauche et d'au moins un taillant de finition (1) de forme bombée, caractérisé en ce que les surfaces de recouvrement (2) parallèles sont limitées sur leur bord par un premier arc de cercle (3), avec un premier rayon $R_1$, défini par un angle α et un arc de cercle (3') identique, avec le premier rayon $R_1$, défini par un angle α, situé à l'opposé de celui-ci, ainsi qu'une première ligne (4) se raccordant au premier arc de cercle (3) et une deuxième ligne (4') se raccordant à l'arc de cercle (3') identique, la première ligne (4) s'étendant jusqu'à un premier arc (5) de rayon r et la deuxième ligne (4') s'étendant jusqu'à un deuxième arc (5') de rayon r, les arcs de cercle (3, 3'), les arêtes d'ébauche (22) et les lignes (4, 4'), définissant les arêtes de finition (23) d'un taillant combiné d'ébauche et de finition (1), le premier arc (5) se raccordant par une première partie (6) au deuxième arc de cercle (3') et le deuxième arc (5') se raccordant par une deuxième partie (6') au premier arc de cercle (3).

2. Taillant amovible selon la revendication 1, caractérisé en ce que le rayon $R_1$ des arcs de cercle (3, 3') du taillant de finition (1) correspond au rayon des taillants amovibles (7) circulaires pour l'usinage d'ébauche.

3. Taillant amovible selon la revendication 1 ou 2, caractérisé en ce que l'angle $\alpha$, à partir du point (8, 8') de raccordement des arcs de cercle (3, 3') avec les lignes (4, 4') qui constituent l'arête de finition (23), est compris entre 10 et 90 degrés.

4. Taillant amovible selon l'une des revendications 1 à 3, caractérisé en ce que les lignes (4, 4') qui forment l'arête de finition (23) font partie d'un cercle dont le rayon de bombé est $R_B > 20\,R_1$.

5. Taillant amovible selon l'une des revendications 1 à 3, caractérisé en ce que les lignes (4, 4') qui constituent l'arête de finition (23) sont des droites.

6. Taillant amovible selon l'une des revendications 1 à 5, caractérisé en ce que le rayon r des arcs (5, 5') représente 0,1-0,25 fois le rayon $R_1$ des arcs de cercle (3, 3').

7. Taillant amovible selon l'une des revendications 1 à 6, caractérisé en ce que la longueur des lignes (4, 4') qui constituent l'arête de finition (23) représente 0,1 à 0,9 fois le premier rayon $R_1$.

**Fig. 2**  STAND DER TECHNIK

15  14  13  10

**Fig. 1**  STAND DER TECHNIK

$7_1$  R7  22  A7  A1  X

$7_2$  22  R7  22  23  R1  24  1  19  17

$7_3$  A7  R7  22  18

**Fig. 3**
STAND DER TECHNIK

**Fig. 5**

**Fig. 4**

**Fig. 6**

EP 0 300 247 B1

**Fig. 1**